# FASCICULE DE BREVET EUROPEEN

(11) **EP 2 821 769 B1**
(45) Date de publication et mention de la délivrance du brevet: **04.05.2016**
(21) Numéro de dépôt: 14002080.1
(22) Date de dépôt: 17.06.2014
(51) Int. Cl.: G01M 13/02, G01N 29/22

(54) **Système et procédé de contrôle d'une pièce à surveiller rotative qui est agencée dans un organe mécanique**
Kontrollsystem und -verfahren eines zu überwachenden drehbaren Teils, das in einem mechanischen Organ angeordnet ist
System and method for checking a rotary part to be monitored, which is arranged in a mechanical member

(30) Priorité: 03.07.2013 FR 1301575
(43) Date de publication de la demande: 07.01.2015
(73) Titulaire: Airbus Helicopters, 13725 Marignane Cedex (FR)
(72) Inventeur: Beck, Philippe, F-13490 Jouques (FR); Baixas, André, Jean, F-13127 Vitrolles (FR); Bernier, Sébastien, F-84120 Pertuis (FR); Biletta, Eric, F-83910 Pourrieres (FR); Molinas, Olivier, F-13580 La Fare Les Oliviers (FR)
(74) Mandataire: GPI & Associés

(56) Documents cités:
- EP-A2- 2 042 076
- WO-A1-2011/004101
- US-A- 3 841 764
- US-A1- 2006 162 456
- US-A1- 2008 312 848
- US-A1- 2012 167 688

## Description

La présente invention concerne un système et un procédé de contrôle d'une pièce à surveiller rotative, la pièce à surveiller étant agencée dans un organe mécanique. Plus particulièrement, l'organe mécanique peut être une boîte de transmission de puissance, éventuellement une boîte de transmission de puissance d'un véhicule tel qu'un aéronef.

Une telle boîte de transmission de puissance peut être interposée entre une installation motrice et au moins un rotor ou un arbre tournant d'un véhicule. Une boîte de transmission de puissance peut comprendre en son sein au moins un étage de réduction de vitesse qui est muni d'au moins une pièce à surveiller rotative. Une telle pièce à surveiller est par exemple pourvue d'un arbre portant un engrenage.

L'arbre peut comprendre des tronçons soudés les uns aux autres. Cet arbre est susceptible de s'user lors de son utilisation. Un utilisateur vérifie alors l'intégrité physique de la pièce à surveiller rotative, et notamment des soudures de cette pièce à surveiller. L'opération de contrôle peut notamment consister à vérifier l'absence de fissure sur la pièce à surveiller.

Toutefois, la pièce à surveiller est agencée à l'intérieur de la boîte de transmission de puissance, dans une zone quasiment inaccessible. On comprend qu'il est alors délicat de contrôler cette pièce à surveiller de manière non destructive.

Selon une première méthode, un opérateur enlève la boîte de transmission de puissance du véhicule, puis démonte cette boîte de transmission de puissance. L'opérateur contrôle alors la pièce à surveiller par un procédé annexe, par exemple un procédé de magnétoscopie.

Cette première méthode implique un démontage de la boîte de transmission pouvant induire une immobilisation relativement longue de la boîte de transmission de puissance et donc du véhicule. L'immobilisation est de l'ordre de deux semaines par exemple.

Selon une deuxième méthode, un opérateur vidange la boîte de transmission de puissance puis démonte le fond de cette boîte de transmission de puissance pour accéder à la pièce à surveiller.

L'opérateur contrôle alors la pièce à surveiller en l'inspectant par un procédé faisant intervenir des courants de Foucault.

Cette deuxième méthode peut induire une immobilisation de la boîte de transmission de puissance durant une durée modérée de l'ordre de 8 heures par exemple.

Ces première et deuxième méthodes sont intéressantes mais induisent une immobilisation non négligeable de l'organe mécanique à contrôler, et de fait du véhicule muni de cet organe mécanique. De plus, ces méthodes présentent un risque d'endommagement des pièces à démonter et/ou à inspecter. Le risque de la deuxième méthode est également d'oublier une pièce dans la boîte de transmission de puissance.

Le document Japonais publié sous la référence 07-174739 le 14 juillet 1995 décrit un dispositif muni d'un chariot portant une pluralité de sondes. Des ressorts pressent les sondes contre la surface de la pièce à surveiller.

Le document KR20100078441 décrit un procédé de contrôle d'un essieu par ultrasons. Ce procédé met en oeuvre un système comprenant notamment un dispositif de détection, un dispositif pour enlever de l'huile, et un dispositif pour acheminer de l'huile.

Le document EP2192406 décrit un appareil de copie muni d'un chariot portant un détecteur de défaut par ultrasons.

Des sondes à ultrasons peuvent donc être utilisées pour tenter de détecter des défauts. Une telle sonde émet un signal vers la pièce à surveiller. En fonction de l'écho reçu en retour par la sonde, un opérateur peut déterminer si une pièce présente un défaut. L'écho peut aussi transmettre d'autres informations, relatives par exemple à une modification de la géométrie d'une pièce.

Les défauts et informations déduites de l'écho sont dénommés par la suite « défaut » par commodité.

Cependant, la mise en oeuvre d'une telle sonde peut être délicate. En effet, la sonde doit assurer une propagation des ondes constante par rapport à la pièce à surveiller pour fournir des informations exploitables.

Par ailleurs, à titre informatif et dans un domaine sans rapport avec l'invention, on connait un dispositif de traitement du cancer de la prostate par ultrasons. Une sonde émet des ondes ultrasonores pour traiter une prostate. Cette sonde peut être disposée sur l'extrémité d'un endoscope. Cette extrémité peut présenter une forme concave autour de la sonde pour éviter une dispersion des ondes émises.

Ce dispositif ne fournit aucun enseignement pour la détection d'un défaut sur une pièce interne rotative d'un organe mécanique.

Le réseau internet présente à l'adresse http://www.olympus-ims.com/fr/erw/ un système d'inspection de tubes soudés par résistance électrique. Ce système utilise la technologie des ultrasons multiéléments pour inspecter une soudure à l'aide d'une tête mobile en rotation. La capacité de rotation de la tête permet un mouvement séparé de chaque sonde de -120 à 120 degrés le long de la soudure à inspecter.

Les documents US 2006/162456, US 2012/167688, US 2008/312848, WO 2011/004101 et EP 2042076 sont éloignés de l'invention. On connait aussi le document US 3841764.

Le document US 2006/162456 décrit un système pour contrôler une lisse immobile. Ce système présente un instrument trapézoïdale.

Le document US 2012/167688 présente un dispositif fixé de manière permanente à un tube pour contrôler son épaisseur.

Le document US 2008/312848 un système muni de plots et d'une sonde.

Le document WO 2011/004101 présente un dispositif à insérer dans un orifice endoscopique. Le dispositif comporte une canne portant un doigt pivotant. Ce doigt pivotant s'étend d'une extrémité munie d'une lame de support de sonde vers une extrémité portant un patin d'appui mobile.

Le document EP 2042076 présente un endoscope orientable.

La présente invention a alors pour objet de proposer un système pour contrôler une pièce à surveiller rotative qui est agencée à l'intérieur d'un organe mécanique.

Ainsi, l'invention concerne un système pour contrôler une pièce à surveiller rotative agencée à l'intérieur d'un organe mécanique, la pièce à surveiller comprenant une paroi plane et une paroi galbée présentant une angulation entre elles. La pièce à surveiller est par exemple une pièce à symétrie de révolution d'une boîte de transmission de puissance.

Ce système comporte un endoscope sondeur portant une tête, cette tête présentant une face plane apte à être plaquée contre ladite paroi plane, la tête ayant une sonde à ultrasons et au moins un aimant affleurant la face plane, la tête ayant une face galbée perpendiculaire à la face plane et conformée à la forme de la paroi galbée de la pièce à surveiller, la face plane et la face galbée formant une structure en L apte à être maintenue contre la pièce à surveiller via chaque aimant en autorisant un mouvement rotatif autour de son axe de travail de cette pièce à surveiller par rapport à la tête de l'endoscope sondeur.

De plus, l'endoscope sondeur comprend un tube dit « tube endoscopique rigide » qui est suivi d'un tube dit « tube endoscopique articulé » portant la tête. Ainsi, le tube endoscopique articulé peut posséder un béquillage.

Le tube endoscopique rigide permet de diriger l'endoscope sondeur selon une direction privilégiée. Par contre, le tube endoscopique articulé permet d'ajuster la position de la tête pour la positionner contre la pièce à surveiller.

Par conséquent, le système équipe un endoscope d'une sonde à ultrasons pour obtenir un endoscope sondeur. Cet endoscope sondeur peut être introduit directement dans l'organe mécanique, avec un démontage très limité de cet organe mécanique et sans vidange pour procéder au contrôle de la pièce à surveiller. Ce système induit alors une immobilisation réduite de l'organe mécanique.

L'introduction d'un endoscope dans un organe mécanique non prévu à cet effet telle qu'une boîte de transmission de puissance n'a rien d'évident. Toutefois, on verra par la suite que l'endoscope peut être introduit par des orifices existants de l'organe mécanique.

De plus, la mise en oeuvre d'un endoscope sondeur effectuant un contrôle par ultrasons n'est pas évidente dans la mesure où la sonde à ultrasons doit être correctement positionnée par rapport à la pièce à surveiller rotative. L'endoscope sondeur de l'invention permet de remédier à ce problème par une synergie entre la face plane de la tête, la face galbée de la tête et l'implémentation d'au moins un aimant.

En effet, chaque aimant permet de plaquer la tête contre la pièce à surveiller. La face plane et la face galbée sont quant à elles conformées à la forme de la pièce à surveiller, et par exemple à la forme d'un épaulement de cette pièce à surveiller qui fait l'objet d'une soudure. Par conséquent, la tête positionne de manière adéquate la sonde à ultrasons par rapport à la pièce à surveiller. De plus, cette pièce à surveiller peut être entraînée en rotation pour son contrôle, les aimants n'entravant pas un tel mouvement rotatif de la pièce à surveiller par rapport à la sonde à ultrasons.

Ce système peut de plus comporter une ou plusieurs des caractéristiques qui suivent.

Ainsi, l'endoscope sondeur peut comporter un moyen de manoeuvrabilité du tube endoscopique articulé.

Ce moyen de manoeuvrabilité comporte par exemple au moins un lien flexible qui est relié au tube endoscopique articulé. Un opérateur dirige la tête de l'endoscope sondeur en manoeuvrant le lien flexible.

Les moyens de manoeuvrabilité des endoscopes usuels peuvent être utilisés.

Par ailleurs, la tête peut comporter deux aimants disposés de part et d'autre de la sonde à ultrasons.

Ainsi, le positionnement de la sonde à ultrasons est optimisé puisque la tête est reliée à la pièce à surveiller par deux aimants encadrant cette sonde. La stabilité de la sonde à ultrasons par rapport à la pièce à surveiller tend alors à être optimisée.

En outre, le système peut comporter un moyen de guidage de l'endoscope sondeur. Ce moyen de guidage vers la zone à inspecter comporte par exemple un tube fixé à l'organe mécanique, et traversé par l'endoscope sondeur. L'introduction de l'endoscope sondeur dans l'organe mécanique est alors facilitée. L'endoscope sondeur peut être maintenu en position dans le moyen de guidage.

Par ailleurs, l'endoscope sondeur peut comporter un tuyau d'acheminement d'un couplant ultra-sonique débouchant de la tête pour assurer une bonne transmission des ultrasons dans la pièce à surveiller. Selon un autre aspect, le système comporte un poste à ultrasons qui est déporté et relié à la sonde à ultrasons.

Le poste à ultrasons communique avec la sonde, analyse le signal reçu et affiche le résultat de l'analyse.

Un opérateur positionne alors l'endoscope sondeur, puis procède au contrôle de la pièce à surveiller en utilisant le poste à ultrasons. On se référera à la littérature pour obtenir une description d'un tel poste à ultrasons.

Par ailleurs, le système peut comporter un endoscope de visualisation qui est muni d'une caméra vidéo pour visualiser la position de la tête de l'endoscope sondeur.

En effet, l'endoscope sondeur traverse l'organe mécanique pour atteindre la pièce à surveiller. Son introduction peut être guidée par un moyen de guidage pour faciliter sa mise en place. Lorsque l'endoscope sondeur est introduit dans l'organe mécanique, un opérateur peut incliner la tête portant la sonde à ultrasons pour la positionner contre la pièce à surveiller.

Dès lors, un endoscope de visualisation est éventuellement utilisé en parallèle à l'endoscope sondeur pour aider un opérateur à positionner la sonde à ultrasons de la manière requise.

Le système peut d'ailleurs comporter une unité de visualisation qui est reliée à l'endoscope de visualisation pour afficher sur un écran les images captées par l'endoscope de visualisation.

Enfin, l'endoscope sondeur comporte éventuellement un moyen de fixation pour être fixé à un carter de l'organe mécanique durant une opération de contrôle.

De même, un endoscope de visualisation peut comporter un moyen de fixation pour être fixé à un carter.

L'invention vise aussi un organe mécanique muni d'une pièce à surveiller rotative inaccessible de l'extérieur de l'organe mécanique, cet organe mécanique comprenant au moins une canne de lubrification amovible fixée à un carter de l'organe mécanique.

Dès lors, l'organe mécanique comporte un système du type décrit précédemment agencé sur l'organe mécanique uniquement lors d'un contrôle de la pièce à surveiller. Ainsi, l'endoscope sondeur est introduit dans l'organe mécanique uniquement lors d'un contrôle en lieu et place de la canne de lubrification.

L'invention concerne en outre un véhicule muni de cet organe mécanique.

L'invention vise aussi un procédé de contrôle d'une pièce à surveiller d'un tel organe mécanique. Selon ce procédé :
- on enlève la canne de lubrification, et éventuellement on installe un moyen de guidage,
- on introduit l'endoscope sondeur en lieu et place de la canne de lubrification, le cas échéant au travers du moyen de guidage
- on manoeuvre l'endoscope sondeur pour plaquer la face plane de la tête contre une paroi plane de la pièce à surveiller et pour disposer la face galbée de la tête contre une paroi galbée de la pièce à surveiller,
- on active la sonde à ultrasons pour acquérir des données de mesure permettant de déterminer la présence d'un éventuel défaut,
- on met en rotation la pièce à surveiller.

Par conséquent, le procédé permet de contrôler facilement un organe mécanique. Ce procédé ne nécessite pas de vidanger ou de démonter une boîte de transmission de puissance, en impliquant juste le remplacement d'une canne de lubrification par un endoscope sondeur.

En présence d'un système muni d'un endoscope sondeur et d'un endoscope de visualisation :
- on enlève deux cannes de lubrification, et éventuellement on installe au moins un moyen de guidage,
- on introduit l'endoscope sondeur en lieu et place d'une canne de lubrification et un endoscope de visualisation en lieu et place de l'autre canne de lubrification, le cas échéant au travers de moyens de guidage,
- sous la surveillance de l'endoscope de visualisation, on manoeuvre l'endoscope sondeur pour plaquer la face plane de la tête contre une paroi plane de la pièce à surveiller et pour disposer la face galbée de la tête contre une paroi galbée de la pièce à surveiller,
- on active la sonde à ultrasons pour acquérir des données de mesure permettant de déterminer la présence d'un éventuel défaut.
- on met en rotation la pièce à surveiller.

L'endoscope sondeur et/ou l'endoscope de visualisation peuvent être fixés à un carter de l'organe mécanique durant l'acquisition des mesures.

L'invention et ses avantages apparaîtront avec plus de détails dans le cadre de la description qui suit en référence aux figures annexées qui représentent :
- la figure 1, une coupe d'un organe mécanique à contrôler,
- la figure 2, une coupe d'un endoscope sondeur,
- la figure 3, une vue de la tête d'un endoscope sondeur,
- la figure 4, une représentation d'un système muni d'un endoscope sondeur et d'un endoscope de visualisation,
- les figures 5 à 8 des vues illustrant le procédé mis en oeuvre.

Les éléments présents dans plusieurs figures distinctes sont affectés d'une seule et même référence.

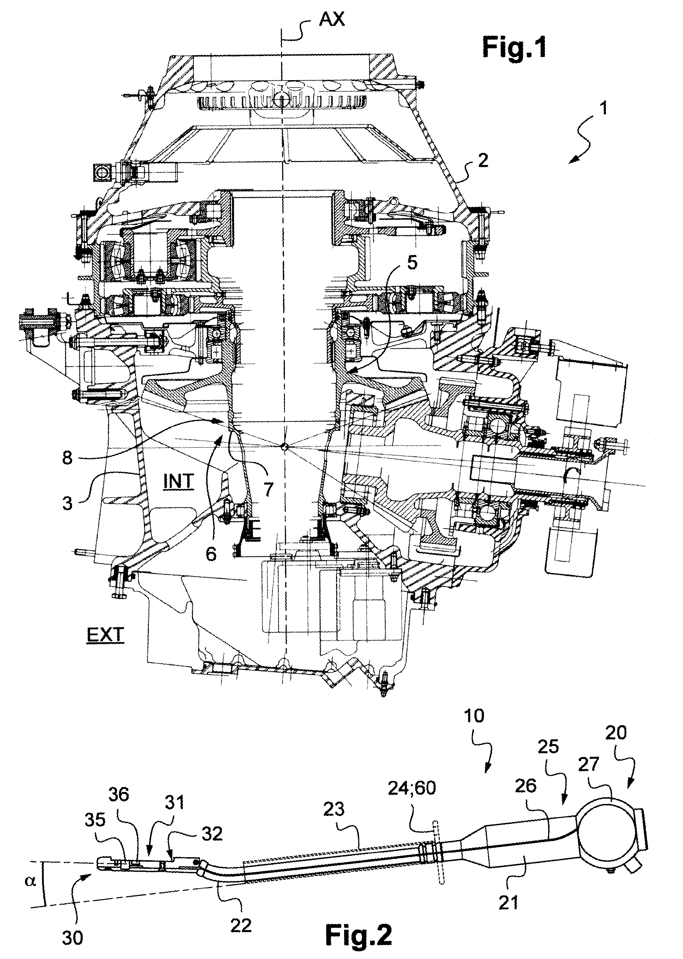

La figure 1 présente un véhicule 1 muni d'un organe mécanique 2. Les autres organes du véhicule ne sont pas schématisés pour ne pas alourdir inutilement la figure 1.

Cet organe mécanique peut être une boîte de transmission de puissance, interposée entre au moins un rotor et au moins un moteur d'un aéronef par exemple.

L'organe mécanique 2 comprend une pièce à surveiller 5 qui est disposée à l'intérieur INT d'un carter 3. Dès lors, la pièce à surveiller 5 n'est pas accessible de l'extérieur EXT de l'organe mécanique 2. La pièce à surveiller effectue en opération une rotation autour d'un axe dénommé « axe de travail AX » par commodité.

Cette pièce à surveiller 5 comprend notamment une zone 6 ayant par exemple fait l'objet d'une soudure. Cette zone 6 comporte un épaulement cylindrique comprenant une paroi plane 7 et une paroi galbée 8 décrivant un cylindre. L'organe mécanique peut être muni d'au moins une canne de lubrification non visible sur la figure 1, pour pulvériser un lubrifiant à l'intérieur de l'organe mécanique. Le carter 3 peut alors présenter un orifice par canne de lubrification.

Cet organe mécanique est alors muni d'un système 10 pour contrôler la pièce à surveiller 5. Ce système est amovible de manière à être agencé uniquement lors d'un contrôle de la pièce à surveiller 5.

En référence à la figure 2, ce système 10 est muni d'un endoscope sondeur 20.

L'endoscope sondeur est pourvu d'une tête 30 portant une sonde 35 à ultrasons.

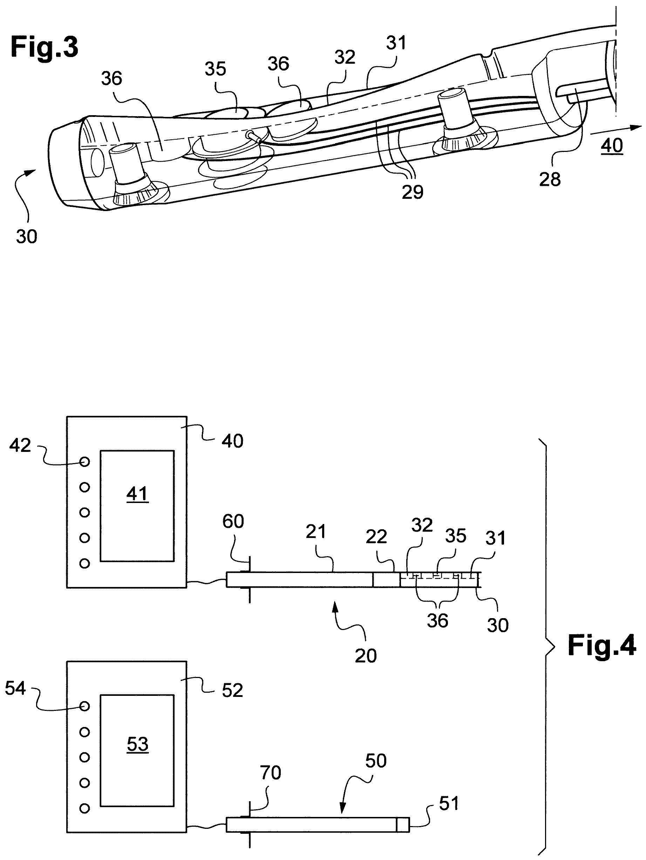

En référence à la figure 3, la tête 30 est munie d'une face plane 31. La sonde 35 débouche alors sur cette face plane 31 pour émettre des ultrasons vers une pièce à surveiller, et recevoir les échos en résultant.

De plus, la tête est aussi pourvue d'au moins un aimant 36 débouchant sur la face plane 31 de manière à plaquer la face plane 31 de la tête 30 contre la paroi plane 7 de la pièce à surveiller 5. Deux aimants 36 peuvent être disposés de part et d'autre de la sonde 35 pour optimiser le positionnement de la sonde 35 par rapport à la pièce à surveiller 5.

En outre, la tête 30 présente une face galbée 32 conformée à la paroi galbée 8 de la pièce à surveiller. La face galbée 32 s'étend en élévation à partir de la face plane 31, en présentant une angulation avec cette face plane 31. La face galbée peut notamment être perpendiculaire à la face plane. Cette face galbée présente alors une concavité épousant la forme convexe de la paroi galbée 8.

Dès lors, la face plane et la face galbée forment une structure présentant sensiblement une forme en L pour pouvoir être positionnées contre un coin de la pièce à surveiller. On entend par « avoir une forme en L », le fait que chaque section en élévation de ladite structure forme sensiblement un L.

La tête peut ainsi être plaquée contre la pièce à surveiller 5 via chaque aimant 36, tout en laissant à cette pièce à surveiller 5 sa liberté de mouvement en rotation autour de l'axe de travail AX.

La sonde 35 et les aimants 36 peuvent être reliés par des liaisons 29 filaires ou non filaires à une unité de commande 40 non représentée sur la figure 3. Cette unité de commande est dénommée « poste à ultrasons » par la suite.

Par ailleurs, l'endoscope sondeur 20 est équipé d'un tuyau 28 d'acheminement de couplant ultra-sonique qui débouche sur la tête 30. Ce tuyau 28 permet d'acheminer un couplant ultra-sonique vers la tête 30. Le couplant ultra-sonique peut être de l'huile.

Pour porter la tête 30, l'endoscope sondeur 20 est muni d'un tube endoscopique rigide 21 qui est prolongé par un tube endoscopique articulé 22 portant la tête 30. Ainsi, le tube endoscopique articulé 22 permet de déplacer la tête 30 dans un secteur angulaire α. Le tube endoscopique articulé peut être relié à la tête 30 par une articulation laissant un degré de liberté en rotation à la tête, permettant par exemple le déplacement de la tête 30 vers la pièce à surveiller 5 sous l'effet des aimants 36.

L'endoscope sondeur comprend à cet effet un moyen de manoeuvrabilité 25 manoeuvrant le tube endoscopique articulé 22. Le moyen de manoeuvrabilité 25 présenté sur la figure 3 inclut un lien flexible 26 relié à un actionneur 27. En manoeuvrant l'actionneur 27, un opérateur peut déplacer le tube endoscopique articulé et donc la tête 30.

De plus, le système 10 peut comprendre un moyen de guidage 24 de l'endoscope sondeur 20. Ce moyen de guidage peut par exemple s'étendre sur la longueur du tube endoscopique rigide. En outre, le moyen de guidage peut comprendre un moyen de fixation de l'endoscope sondeur au carter de l'organe mécanique.

Par ailleurs, la figure 4 présente un système 10 muni d'un poste à ultrasons 40 qui est relié à l'endoscope sondeur 20. Le poste à ultrasons 40 peut être déporté de l'organe mécanique en étant relié par des liaisons filaires ou non filaires à l'endoscope sondeur 20.

Ce poste à ultrasons comprend un écran 41 et éventuellement une pluralité de boutons 42. Le poste à ultrasons a pour fonction de générer l'émission d'ultrasons via la sonde 35 de l'endoscope sondeur et d'afficher une représentation du signal de mesure capté par la sonde 35.

Par ailleurs, le système 10 est favorablement muni d'un endoscope de visualisation 50 portant une caméra vidéo 51 et d'une unité de visualisation 52 reliée à l'endoscope de visualisation 50. Cette unité de visualisation peut comprendre un écran 53 présentant les images filmées à l'aide de la caméra vidéo 51, et une pluralité de boutons 54.

En outre, l'endoscope sondeur 20 et/ ou l'endoscope de visualisation 50 peuvent comporter un moyen de fixation 60, 70 pour être fixés à un carter 3.

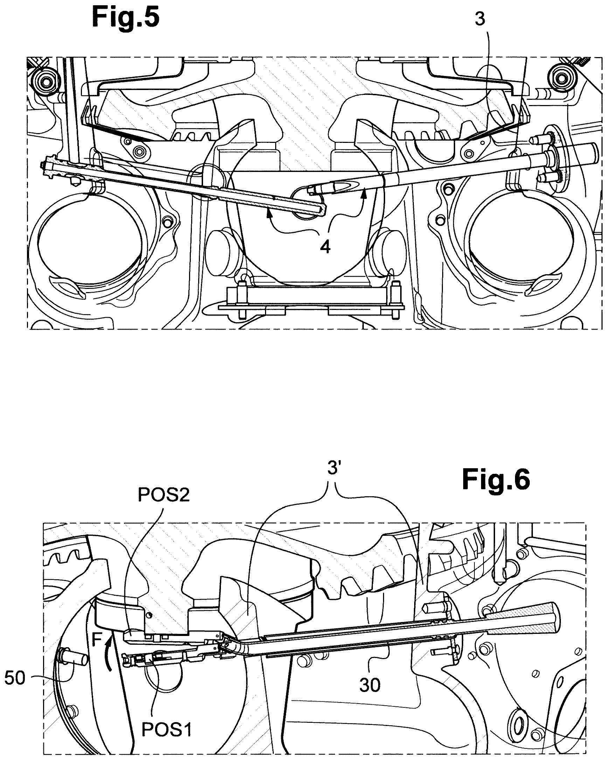

Les figures 5 à 8 illustrent le procédé de contrôle selon l'invention.

En référence à la figure 5, un opérateur inhibe le système de lubrification en enlevant au moins la canne de lubrification 4 de l'organe mécanique. Cette opération permet de libérer au moins un orifice du carter 3 de l'organe mécanique. L'opérateur peut alors agencer un moyen de guidage par endoscope pour guider chaque endoscope.

Dès lors et en référence à la figure 6, l'opérateur introduit l'endoscope sondeur 20 dans l'organe mécanique 3, cet endoscope sondeur traversant des parois 3' de l'organe mécanique 3.

Au préalable, l'opérateur introduit l'endoscope de visualisation 50 dans l'organe mécanique 3 pour surveiller visuellement la manipulation de l'endoscope sondeur 20.

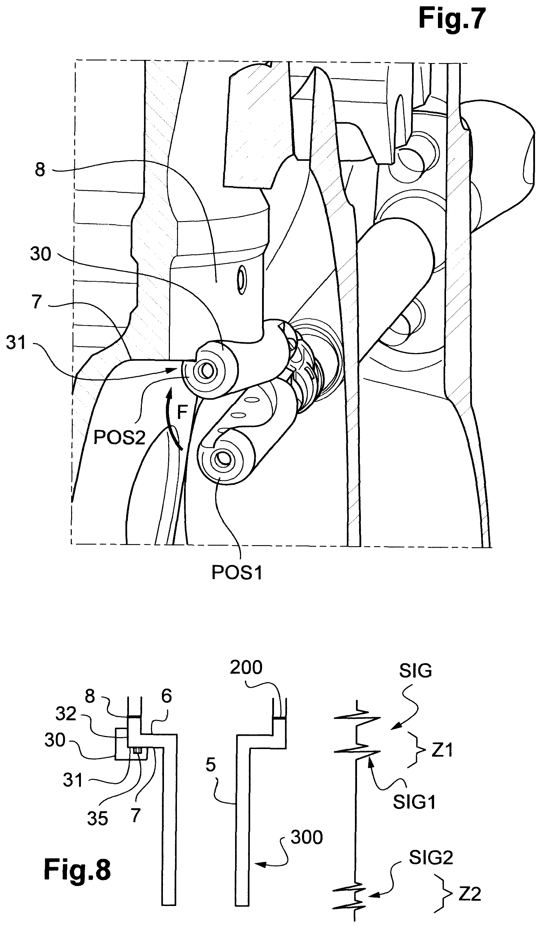

En référence aux figures 6 et 7, l'opérateur manoeuvre l'endoscope sondeur 20 pour le déplacer selon la flèche F d'une première position POS1, obtenue suite à l'introduction de l'endoscope sondeur dans l'organe mécanique, vers une deuxième position POS 2.

Dans cette deuxième position POS2, la face plane 31 de la tête 30 est contre une paroi plane 7 de la pièce à surveiller 5, et la face galbée 32 de la tête 30 est contre une paroi galbée 8 de la pièce à surveiller 5.

Le positionnement de la tête 30 peut être surveillé à l'aide de l'endoscope de visualisation.

A ce stade, l'opération de contrôle peut débuter. Ainsi, l'opérateur peut mettre en rotation la pièce à surveiller, en mettant en rotation un rotor relié à l'organe mécanique par exemple.

La sonde 35 permet alors l'affichage d'un signal de mesure SIG sur le poste à ultrasons. En fonction du signal affiché, l'opérateur peut en déduire la présence d'un défaut. Par exemple, la présence d'un écho SIG1 dans une porte de regard Z1 peut être le révélateur d'un défaut sur un cordon de soudure 200. A l'inverse, la présence d'un écho SIG2 dans une porte de regard Z2 peut être le révélateur de l'absence de défaut dans le fond 300 de la pièce à surveiller.

La sonde à ultrasons peut émettre des ultrasons avant la mise en rotation de la pièce à surveiller, et inversement.

Durant l'opération de contrôle, un couplant ultra-sonique peut être injecté pour favoriser le cheminement des ultrasons émis et reçus par l'endoscope sondeur.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système (10) pour contrôler une pièce à surveiller (5) rotative autour d'un axe de travail (AX) agencée à l'intérieur d'un organe mécanique (2), ladite pièce à surveiller (5) comprenant une paroi plane (7) et une paroi galbée (8) présentant une angulation entre elles,
**caractérisé en ce que** ce système (10) comporte un endoscope sondeur (20) muni d'un tube endoscopique rigide (21) suivi d'un tube endoscopique articulé (22) portant une tête (30), ladite tête (30) présentant une face plane (31) apte à être plaquée contre ladite paroi plane (7), ladite tête (30) ayant une sonde (35) à ultrasons et au moins un aimant (36) affleurant ladite face plane (31), ladite tête (30) ayant une face galbée (32) perpendiculaire à la face plane (31) et conformée à la forme de ta paroi galbée (8) de la pièce à surveiller (5), la face plane (31) et la face galbée (32) formant une structure en L apte à être maintenue contre la pièce à surveiller (5) via chaque aimant (36) en autorisant un mouvement rotatif de ladite pièce à surveiller (5) par rapport à ladite tête (30), ledit mouvement rotatif étant une rotation de la pièce à surveiller autour dudit axe de travail (AX), ladite face galbée présentant une concavité épousant une forme convexe de ladite paroi galbée (8).

2. Système selon la revendication 1,
**caractérisé en ce que** ledit endoscope sondeur (20) comporte un moyen de manoeuvrabilité (25) manoeuvrant le tube endoscopique articulé (22).

3. Système selon la revendication 2,
**caractérisé en ce que** ledit moyen de manoeuvrabilité (25) comporte un lien flexible (26) relié au tube endoscopique articulé (22).

4. Système selon l'une quelconque des revendications 1 à 3,
**caractérisé en ce que** ladite tête (30) comporte deux aimants (36) disposés de part et d'autre de ladite sonde (35).

5. Système selon l'une quelconque des revendications 1 à 4,
**caractérisé en ce que** ledit système (10) comporte un moyen de guidage (24) de l'endoscope sondeur (20).

6. Système selon l'une quelconque des revendications 1 à 5,
**caractérisé en ce que** ledit endoscope sondeur (20) comporte un tuyau (28) d'acheminement d'un couplant ultra-sonique débouchant de ladite tête (30) pour assurer une bonne transmission des ultrasons dans la pièce à surveiller.

7. Système selon l'une quelconque des revendications 1 à 6,
**caractérisé en ce que** ledit système (10) comporte un poste à ultrasons (40) déporté et relié à ladite sonde (35) à ultrasons, ledit poste à ultrasons (40) commandant ladite sonde (35).

8. Système selon l'une quelconque des revendications 1 à 7,
**caractérisé en ce que** ledit système (10) comporte un endoscope de visualisation (50) muni d'une caméra vidéo (51) pour visualiser la position de la tête (30) de l'endoscope sondeur (20).

9. Système selon l'une quelconque des revendications 1 à 8,
**caractérisé en ce que** ledit système (10) comporte une unité de visualisation (52) reliée audit endoscope de visualisation (50).

10. Système selon l'une quelconque des revendications 1 à 9,
**caractérisé en ce que** ledit endoscope sondeur (20) comporte un moyen de fixation (60) pour être fixé à un carter (3).

11. Système selon la revendication 8,
**caractérisé en ce que** ledit endoscope de visualisation comporte un moyen de fixation (70) pour être fixé à un carter (3).

12. Organe mécanique (2) muni d'une pièce à surveiller (5) rotative inaccessible de l'extérieur (EXT) de l'organe mécanique (2), ledit organe mécanique (2) comprenant au moins une canne de lubrification (4) amovible fixée à un carter (3) de l'organe mécanique (2),
**caractérisé en ce que** ledit organe mécanique (2) comporte un système selon l'une quelconque des revendications 1 à 11, ledit endoscope sondeur (20) étant introduit dans ledit organe mécanique (2) uniquement lors d'un contrôle en lieu et place de ladite canne de lubrification (4).

13. Véhicule (1),
**caractérisé en ce que** ce véhicule comprend un organe mécanique (2) selon la revendication 12.

14. Procédé de contrôle d'une pièce à surveiller (5) rotative d'un organe mécanique (2) selon la revendication 12,
**caractérisé en ce que**. :
- on enlève ladite canne de lubrification (4),
- on introduit l'endoscope sondeur (20) en lieu et place de la canne de lubrification (4),
- on manoeuvre l'endoscope sondeur (20) pour plaquer la face plane (31) de la tête (30) contre une paroi plane (7) de la pièce à surveiller (5) et pour disposer la face galbée (32) de la tête (30) contre une paroi galbée (8) de la pièce à surveiller (5),
- on active la sonde (35) à ultrasons pour acquérir des données de mesure permettant de déterminer la présence d'un éventuel défaut,
- on met en rotation la pièce à surveiller (5).

15. Procédé selon la revendication 14,
**caractérisé en ce que** :
- on enlève deux cannes de lubrification (4),
- on introduit l'endoscope sondeur (20) en lieu et place d'une canne de lubrification (4) et un endoscope de visualisation (50) en lieu et place de l'autre canne de lubrification (4),
- sous la surveillance de l'endoscope de visualisation (50), on manoeuvre l'endoscope sondeur (20) pour plaquer la face plane (31) de la tête (30) contre une paroi plane (7) de la pièce à surveiller (5) et pour disposer la face galbée (32) de la tête (30) contre une paroi galbée (8) de la pièce à surveiller (5),
- on active la sonde (35) à ultrasons pour acquérir des données de mesure permettant de déterminer la présence d'un éventuel défaut,
- on met en rotation la pièce à surveiller (5).

16. Procédé selon l'une quelconque des revendications 14 à 15,
**caractérisé en ce qu'**on fixe chaque endoscope (20, 50) à un carter (3) de l'organe mécanique (2).

## Patentansprüche

1. System (10) zum Kontrollieren eines zu überwachenden, sich um eine Arbeitsachse (AX) drehenden Teils (5), welches im Inneren eines mechanischen Organs (2) angeordnet ist, wobei das zu überwachende Teil (5) eine ebene Fläche (7) und eine ausgebauchte Fläche (8) aufweist, die miteinander einen Winkel bilden,
**dadurch gekennzeichnet, dass** das System (10) ein Sondierendoskop (20) aufweist mit einem steifen endoskopischen Rohr (21), gefolgt von einem gelenkigen endoskopischen Rohr (22), welches einen Kopf (30) trägt, wobei der Kopf (30) eine ebene Fläche (31) aufweist, die gegen die ebene Fläche (7) anpressbar ist, wobei der Kopf (30) eine Ultraschallsonde (35) und mindestens einen Magneten (36) aufweist, die mit der ebenen Fläche (31) fluchten, wobei der Kopf (30) eine ausgebauchte, senkrecht zu der ebenen Fläche (31) verlaufende Fläche (32) aufweist, die an die Form der ausgebauchten Fläche (8) des zu überwachenden Teils (5) angepasst ist, wobei die ebene Fläche (31) und die ausgebauchte Fläche (32) eine L-förmige Struktur bilden, die gegen das zu überwachende Teil (5) mittels eines jeden Magneten (36) festhaltbar ist, wobei eine Drehbewegung des zu überwachenden Teils (5) relativ zu dem Kopf (30) zugelassen wird, wobei die Drehbewegung eine Drehung des zu überwachenden Teils um die Arbeitsachse (AX) ist, wobei die ausgebauchte Fläche eine Vertiefung bildet, die sich der konvexen Form der ausgebauchten Fläche (8) anpasst.

2. System nach Anspruch 1,
**dadurch gekennzeichnet, dass** das Sondierendoskop (20) ein Manövrierbarkeitsmittel (25) aufweist, das das gelenkige endoskopische Rohr (22) lenkt.

3. System nach Anspruch 2,
**dadurch gekennzeichnet, dass** das Manövrierbarkeitsmittel (25) eine flexible Verbindung (26) aufweist, die mit dem gelenkigen endoskopischen Rohr (22) verbunden ist.

4. System nach einem der Ansprüche 1 bis 3,
**dadurch gekennzeichnet, dass** der Kopf (30) zwei Magneten (36) aufweist, die zu beiden Seiten der Sonde (35) angeordnet sind.

5. System nach einem der Ansprüche 1 bis 4,
**dadurch gekennzeichnet, dass** das System (10) ein Mittel (24) zur Führung des Sondierendoskops (20) aufweist.

6. System nach einem der Ansprüche 1 bis 5,
**dadurch gekennzeichnet, dass** das Sondierendoskop (20) eine Zuleitung (28) eines Ultraschallkopplungsmittels aufweist, die aus dem Kopf (30) austritt, um eine gute Übertragung von Ultraschall in das zu überwachende Teil zu gewährleisten.

7. System nach einem der Ansprüche 1 bis 6,
**dadurch gekennzeichnet, dass** das System (10) ein abseits angeordnetes Ultraschallgerät (40) aufweist, das mit der Ultraschallsonde (35) verbunden ist, wobei das Ultraschallgerät (40) die Sonde (35) steuert.

8. System nach einem der Ansprüche 1 bis 7,
**dadurch gekennzeichnet, dass** das System ein bildgebendes Endoskop (50) aufweist mit einer Videokamera (51) zum Sichtbarmachen der Position des Kopfes (30) des Sondierendoskops (20).

9. System nach einem der Ansprüche 1 bis 8,
**dadurch gekennzeichnet, dass** das System (10) eine bildgebende Einheit (52) aufweist, die mit dem bildgebenden Endoskop (50) verbunden ist.

10. System nach einem der Ansprüche 1 bis 9,
**dadurch gekennzeichnet, dass** das Sondierendoskop (20) ein Befestigungsmittel (60) aufweist, um mit einem Gehäuse (3) fest verbunden zu werden.

11. System nach Anspruch 8,
**dadurch gekennzeichnet, dass** das bildgebende Endoskop ein Befestigungsmittel (70) aufweist, um mit einem Gehäuse (3) fest verbunden zu werden.

12. Mechanisches Organ (2) mit einem sich drehenden zu überwachenden Teil (5), welches von außerhalb (EXT) des mechanischen Organs (2) nicht zugänglich ist, wobei das mechanische Organ (2) mindestens ein Schmierungsrohr (4) aufweist, das abnehmbar an einem Gehäuse (3) des mechanischen Organs (2) befestigt ist,
**dadurch gekennzeichnet, dass** das mechanische Organ (2) ein System nach einem der Ansprüche 1 bis 11 aufweist, wobei das Sondierendoskop (20) ausschließlich in das mechanische Organ (2) während einer Kontrolle am Ort und anstelle des Schmierungsrohrs (4) eingeführt wird.

13. Fahrzeug (1),
**dadurch gekennzeichnet, dass** das Fahrzeug ein mechanisches Organ (2) nach Anspruch 12 aufweist.

14. Verfahren zur Kontrolle eines sich drehenden zu überwachenden Teils (5) eines mechanischen Organs (2) nach Anspruch 12,
**dadurch gekennzeichnet, dass**:
- das Schmierungsrohr (4) entfernt wird,
- das Sondierendoskop (20) anstatt und anstelle des Schmierungsrohrs (4) eingeführt wird,
- das Sondierendoskop (20) gelenkt wird, um die ebene Fläche (31) des Kopfes (30) gegen eine ebene Fläche (7) des zu überwachenden Teils (5) anzupressen und um die ausgebauchte Fläche (32) des Kopfes (30) gegen eine ausgebauchte Fläche (8) des zu überwachenden Teils (5) anzuordnen,
- die Ultraschallsonde (35) aktiviert wird, um Messdaten zu erhalten, die es erlauben, die Präsenz eines möglichen Fehlers zu bestimmen,
- das zu überwachende Teil (5) in eine Drehbewegung versetzt wird.

15. Verfahren nach Anspruch 14,
**dadurch gekennzeichnet, dass**:
- zwei Schmierungsrohr (4) entfernt werden,
- das Sondierendoskop (20) anstatt und anstelle eines Schmierungsrohrs (4) eingeführt wird und ein bildgebendes Endoskop (50) anstatt und anstelle des anderen Schmierungsrohrs (4) eingeführt wird,
- unter der Überwachung des bildgebenden Endoskops (50) das Sondierendoskop (20) gelenkt wird, um die ebene Fläche (31) des Kopfes (20) gegen eine ebene Fläche (7) des zu überwachenden Teils (5) anzupressen und um die ausgebauchte Fläche (32) des Kopfes (30) gegen eine ausgebauchte Fläche (8) des zu überwachenden Teils (5) anzuordnen,
- die Ultraschallsonde (35) aktiviert wird, um Messdaten zu sammeln, die es erlauben, die Präsenz eines möglichen Fehlers zu bestimmen,
- das zu überwachende Teil (5) in eine Drehbewegung versetzt wird.

16. Verfahren nach einem der Ansprüche 14 bis 15,
**dadurch gekennzeichnet, dass** jedes Endoskop (20, 50) an einem Gehäuse (3) des mechanischen Organs (2) befestigt wird.

## Claims

1. System (10) for inspecting a part to be monitored (5) which rotates about a working axis (AX) and is arranged inside a mechanical member (2), said part to be monitored (5) comprising a plane wall (7) and a curved wall (8), forming an angle between them,
**characterised in that** the system (10) comprises a probe endoscope (20) provided with a rigid endoscope tube (21) followed by an articulated endoscope tube (22) carrying a head (30), said head (30) having a plane face (31) which is suitable for being pressed against said plane wall (7), said head (30) having an ultrasound probe (35) and at least one magnet (36) flush with said plane face (31), said head (30) having a curved face (32) perpendicular to the plane face (31) and conformed to the shape of the curved wall (8) of the part to be monitored (5), the plane face (31) and the curved face (32) forming an L-shaped structure suitable for being held against the part to be monitored (5) via each magnet (36) while allowing a rotary movement of said part to be monitored (5) relative to said head (30), said rotary movement being a rotation of the part to be monitored about said working axis (AX), said curved face having a concavity matching a convex shape of said curved wall (8).

2. System according to claim 1,
**characterised in that** said probe endoscope (20) comprises a manoeuvrability means (25) for manoeuvring the articulated endoscope tube (22).

3. System according to claim 2,
**characterised in that** said manoeuvrability means (25) comprises a flexible link (26) connected to the articulated endoscope tube (22).

4. System according to any one of claims 1 to 3,
**characterised in that** said head (30) comprises two magnets (36) arranged one on either side of said probe (35).

5. System according to any one of claims 1 to 4,
**characterised in that** said system (10) comprises a guide means (24) for guiding the probe endoscope (20).

6. System according to any one of claims 1 to 5,
**characterised in that** said probe endoscope (20) comprises a delivery pipe (28) for delivering an ultrasonic couplant, opening out from said head (30) in order to ensure good transmission of the ultrasound in the part to be monitored.

7. System according to any one of claims 1 to 6,
**characterised in that** said system (10) comprises an ultrasound station (40) remote from and connected to said ultrasound probe (35), said ultrasound station (40) controlling said probe (35).

8. System according to any one of claims 1 to 7,
**characterised in that** said system (10) comprises a viewing endoscope (50) provided with a video camera (51) for viewing the position of the head (30) of the probe endoscope (20).

9. System according to any one of claims 1 to 8,
**characterised in that** said system (10) comprises a display unit (50) connected to said viewing endoscope (50).

10. System according to any one of claims 1 to 9,
**characterised in that** said probe endoscope (20) comprises a fastening means (60) for fastening to a casing (3).

11. System according to claim 8,
**characterised in that** said viewing endoscope comprises a fastening means (70) for fastening to a casing (3).

12. Mechanical member (2) provided with a rotary part to be monitored (5) inaccessible from the outside (EXT) of the mechanical member (2), said mechanical member (2) comprising at least one removable lubrication pipe (4) fastened to a casing (3) of the mechanical member (2),
**characterised in that** said mechanical member (2) comprises a system according to any one of claims 1 to 11, said probe endoscope (20) being inserted into said mechanical member (2) instead and in place of said lubrication pipe (4), during an inspection only.

13. Vehicle (1),
**characterised in that** the vehicle comprises a mechanical member (2) according to claim 12.

14. Method of inspecting a rotary part to be monitored (5) of a mechanical member (2) according to claim 12,
**characterised in that**:
- said lubrication pipe (4) is removed,
- the probe endoscope (20) is inserted instead and in place of the lubrication pipe (4),
- the probe endoscope (20) is manoeuvred in order to press the plane face (31) of the head (30) against a plane wall (7) of the part to be monitored (5) and in order to place the curved face (32) of the head (30) against a curved wall (8) of the part to be monitored (5),
- the ultrasound probe (35) is activated in order to acquire measurement data making it possible to determine the presence of a possible fault,
- the part to be monitored (5) is set in rotation.

15. Method according to claim 14,
**characterised in that**:
- two lubrication pipes (4) are removed,
- the probe endoscope (20) is inserted instead and in place of one lubrication pipe (4) and a viewing endoscope (50) is inserted instead and in place of the other lubrication pipe (4) ,
- under the surveillance of the viewing endoscope (50), the probe endoscope (20) is manoeuvred in order to press the plane face (31) of the head (30) against a plane wall (7) of the part to be monitored (5) and in order to place the curved face (32) of the head (30) against a curved wall (8) of the part to be monitored (5),
- the ultrasound probe (35) is activated in order to acquire measurement data making it possible to determine the presence of a possible fault,
- the part to be monitored (5) is set in rotation.

16. Method according to any one of claims 14 to 15,
**characterised in that** each endoscope (20, 50) is fastened to a casing (3) of the mechanical member (2).
